# EUROPEAN PATENT SPECIFICATION

(11) **EP 3 178 700 B1**
(45) Date of publication and mention of the grant of the patent: **22.04.2020**
(21) Application number: 15829905.7
(22) Date of filing: 08.06.2015
(51) Int. Cl.: B60R 5/04, B60P 7/08

(54) **ARTICLE RETAINING NET FOR AUTOMOBILE TRUNK COMPARTMENT**
ARTIKELHALTENETZ FÜR KOFFERRAUM EINES KRAFTFAHRZEUGS
FILET DE RETENUE D'ARTICLE POUR UN COMPARTIMENT DE COFFRE D'AUTOMOBILE

(30) Priority: 08.08.2014 JP 2014162213
(43) Date of publication of application: 14.06.2017
(73) Proprietor: Morito Co., Ltd., Osaka-shi, Osaka 541-0054 (JP)
(72) Inventor: KUMAGAI, Shuji, Osaka-shi Osaka 541-0054 (JP); HAYASHI, Ken-ichi, Osaka-shi Osaka 541-0054 (JP); MIYAMOTO, Kanto, Osaka-shi Osaka 541-0054 (JP)
(74) Representative: LS-MP von Puttkamer Berngruber Loth Spuhler
(86) International application number: PCT/JP2015/066437
(87) International publication number: WO 2016/021297

(56) References cited:
- EP-A1- 1 870 281
- DE-C1- 19 853 361
- JP-A- H07 277 080
- JP-U- S 638 133
- JP-U- 3 026 263
- JP-U- S61 166 828
- JP-U- S63 180 358
- US-A- 6 099 222

## Description

### Technical Field

The present invention relates to an article retainer provided in a trunk compartment in the rear portion of an automobile.

### Background Art

Various objects such as inspection and maintenance tools, daily goods, and travel goods are stored in the trunk compartment of an automobile. If an automobile is driven while large goods are stacked, or poor-stability goods are loaded, the goods easily fall over or move during a sharp turn or the like. If such a situation occurs, not only may the goods become damaged, but also the automobile may lose balance, and a dangerous situation may arise.

It is known that article retaining nets such as those described in below-listed Patent Documents 1 to 3 are used in order to prevent the above situation. In short, a net is provided in the trunk compartment to press down articles in an attempt to restrict the movement thereof.

### Prior Art Documents

### Patent Documents

Patent Document 1: JP S63-180358U
Patent Document 2: JP H2-72142U
Patent Document 3: JP H3-7044U

An article retainer according to the preamble of claim 1 is further known from US6099222.

### Disclosure of Invention

### Problem to be Solved by the Invention

In the above-described conventional technology, an operator needs to perform the operations of placing the net over the goods, and then fixing the four corners of the net to fixing locations in the trunk compartment. Opposite operations need to be performed when removing the net. This is a reliable method, but is troublesome when the operator is in a hurry.

A first object of the present invention is to provide an article retainer for a trunk compartment according to which a net is semi-automatically placed over goods and removed therefrom along with the opening and closing of a trunk lid.

A second object of the present invention is to provide a net having a structure suited to achieving the first object.

### Means for Solving Problem

An article retainer for an automobile trunk compartment according to one aspect of the present invention includes: a net that has elasticity and is approximately rectangular in a stretched state, wherein one side of the net is attached to a lower inner portion on an outward side of a trunk lid, and another side of the net that opposes the one side is fixed to a position on a floor of the trunk compartment that is nearest to a vehicle inward side (claim 1).

Here, "a lower inner portion on an outward side of a trunk lid" and "a position on a floor of the trunk compartment that is nearest to a vehicle inward side" have meanings to the extent of being reasonably viewed with consideration given to protrusions, recessions, and the like in the trunk compartment. These phrases do not necessarily literally indicate extreme positions, and a margin of at least approximately 10 cm should be allowed.

It is preferable that an elongation rate (extending length of a 100 mm test piece) of the main body net is 160% to 180% (claim 2).

It is preferable that a kickback force (load when 100 mm test piece is stretched to 150 mm) of the main body net is 24 N to 26 N (claim 3).

It is preferable that a load flexure amount (flexure amount when fixed to a jig and loaded with a weight of 2 kg 210×300×40H) of the net main body is 130 mm to 150 mm (claim 4).

It is preferable that an elongation rate of an end elastic cord 25, 26 of the net main body is 240% to 270%, and a kickback force is 3 N to 5 N (claim 5).

A corner portion used in the net includes a U-shaped corner formed by an edge elastic cord, left and right sides of the U-shaped corner being firmly supported by a first base piece and a second base piece, and the first base piece and the second base piece also being firmly sewn together by bias tape (claim 6).

A corner portion used in the net includes a right-angle-shaped corner formed by an edge elastic cord, left and right sides of the right-angle-shaped corner being firmly supported by a first base piece and a second base piece, the first base piece and the second base piece also being firmly sewn together by bias tape, and a D ring for hook engagement being coupled to the second base piece (claim 7).

A method of attaching an article retainer to a trunk compartment of an automobile according to another aspect of the present invention includes the steps of preparing a net that has elasticity and is approximately rectangular in a stretched state; attaching one side of the net to an lower inner portion on an outward side of a trunk lid; and attaching another side of the net that opposes the one side to a position on a floor of the trunk compartment that is nearest to a vehicle inward side (claim 8).

### Effects of the Invention

According to claims 1 to 8 of the present invention, a net is semi-automatically placed on goods and removed therefrom along with the opening and closing of a trunk lid. Accordingly, it is possible to eliminate the need for an operator to personally place the net on goods and remove it therefrom.

According to claims 3 to 6 of the present invention, physically preferable conditions for obtaining the net of claim 1 and 2 are made clear.

According to claim 6 of the present invention, reinforcement is achieved in a corner portion that is subjected to the most load in the net of claim 1.

Hereinafter, embodiments of the present invention will be described with reference to the accompanying drawings.

### Brief Description of Drawings

FIG. 1 is a perspective view of a state in which a net according to a first embodiment of the present invention is provided in a trunk compartment.
FIG. 2 is a side view of a state of the same net when a trunk lid is opened and closed.
FIG. 3 is a front view of the same net
FIG. 4 includes a cross-sectional view (a), a left side view (b), a front view (c), a right side view (d), a bottom view (e), and a back view (f) of a corner portion of the same net that is shown with solid lines in FIG 3.
FIG. 5, (a) to (e) are front views of stages of formation of the corner portion in FIG. 4.
FIG. 6 is a front view of a net according to a variation.
FIG. 7, (a) to (e) are front views of stages of formation of a corner portion in FIG. 6.
FIG. 8, (a) and (b) are front views of stages of formation of a corner portion of a conventional net.

### Modes for Carrying out the Invention

### Embodiment of overall article retainer

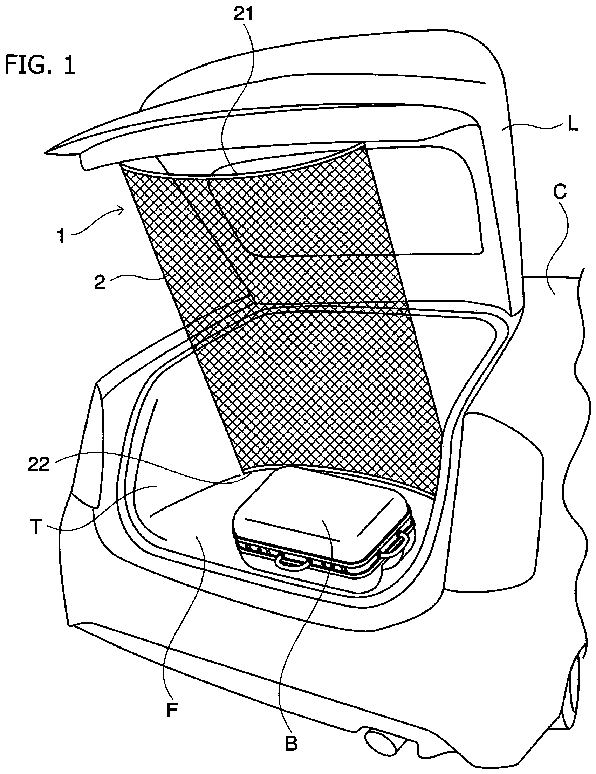

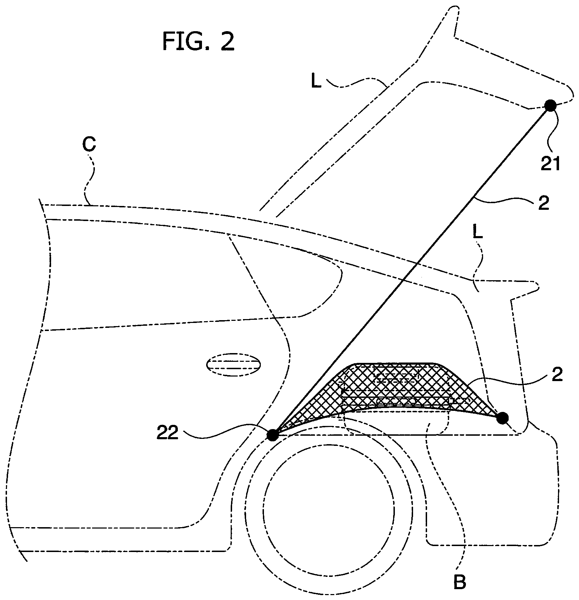

As shown in FIG. 1, an article retainer 1 for a trunk compartment T of an automobile C of the present embodiment has a net main body 2 that is approximately rectangular in a stretched state. As shown in FIGS. 1 and 2, one side 21 of the net main body 2 is attached to the lower inner portion on the outward side of a trunk lid L, and one side 22 of the net main body 2 that opposes the one side 21 is fixed to a position on a floor F of the trunk compartment T that is nearest to the vehicle inward side. Accordingly, in the state where the trunk lid L is open, the net main body 2 is raised up and stretched diagonally upward as shown in FIG. 1 and as shown by the upper solid line in FIG. 2. When the trunk lid L is closed, the net main body 2 contracts and covers goods B as shown by the lower solid lines in FIG. 2, and thus restricts movement of the goods.

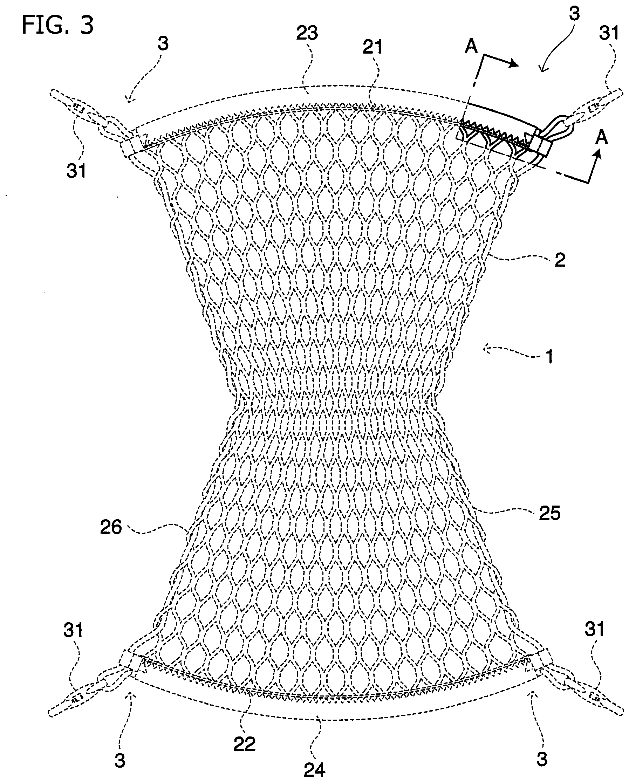

As shown in FIG. 3, the net main body 2 is constituted by weaving sheathed elastic cords into a mesh, and has elasticity in all directions. The number of mesh holes differs depending on the vehicle model and vehicle shape, and in the case of a standard size car, the number can be set to 25 holes (W) x 15 holes (L), with each hole being 80 mm, for example. The two fixed sides of the net main body 2 (upperside elastic cord 21 and lower-side elastic cord 22 in FIG. 3) are bound with pieces of strong bias tape (e.g., sewing elastic) 23 and 24, and the unfixed-side elastic cords of the net main body 2 (right-side end elastic cords 25 and left-side end elastic cords 26 in FIG. 3) tend to contract in the unstretched natural state.

The article retainer 1 has a large difference in size between when contracted and when stretched. In one real example, the length was 660 mm when contracted and 1400 mm when stretched. For this reason, the article retainer 1 needs to stretch 220% or more overall. However, if the amount of stretch is excessive, the force for pressing down goods decreases, which is inconvenient. In order to obtain sufficient force for pressing down goods, it is preferable to set the force of the net main body 2 high and set the force of the end elastic cords 25 and 26 low, and it was found out experimentally that conditions such as the following are preferable.

(1) It is preferable that the elongation rate of the net main body 2 is approximately 160% to 180%. When the net is stretched approximately 170%, the precise length needed from the article retainer 1 when stretched is obtained by adding a hook or another constituent member. Here, the "elongation rate" refers to the length when a 100 mm test piece is stretched.

(2) It is preferable that the kickback force of the net main body 2 is approximately 24 N to 26 N. Here, the "kickback force" refers to the load when the 100 mm test piece is stretched to 150 mm. The larger the numerical value of the kickback force is, the larger the force for pressing down goods is.

(3) It is preferable that the load flexure amount of the net main body 2 is approximately 130 mm to 150 mm. It is preferable that the load flexure amount of the article retainer 1 is approximately 190 mm to 210 mm. Here, the "load flexure amount" refers to the flexure amount when fixed to a jig and loaded with a weight of 2 kg 210×300×40H.

(4) Furthermore, besides the net main body 2, the elongation rate and the kickback force of the end elastic cords 25 and 26 of the net main body are also important elements. It is preferable that the elongation rate of the end elastic cords 25 and 26 of the net main body 2 is approximately 240% to 270%, and it is preferable that the kickback force is approximately 3 N to 5 N.

A preferable net main body member for satisfying the above conditions has a core made of 4480 D (denier) polyurethane, and sheathing threads made of 4000 D polyester. The end elastic cords have a core made of # 50 natural rubber, and sheathing threads made of 1000 D polyester.

### First embodiment of corner portion

A hook 31 for engaging with a protrusion or recession of the trunk compartment T is attached to the elastic cords located at each of four corner portions 3 of the net main body 2. When the net main body 2 is stretched to the stretched state, it goes without saying that the highest load is applied to the four corner portions.

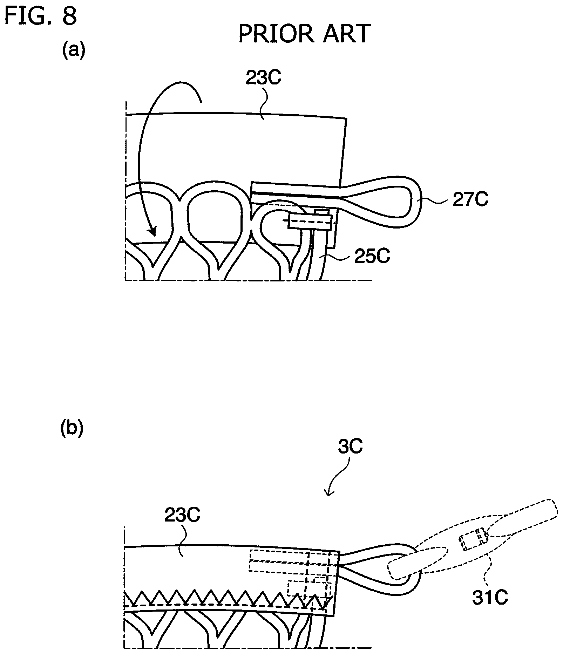

FIG. 8 shows a method of forming a corner portion 3C of a conventional net. A U-shaped elastic cord 27C and an end elastic cord 25C are sewn together with bias tape 23C. With this method, there have been cases where the elastic cords 27C and 25C break when repeatedly subjected to a load.

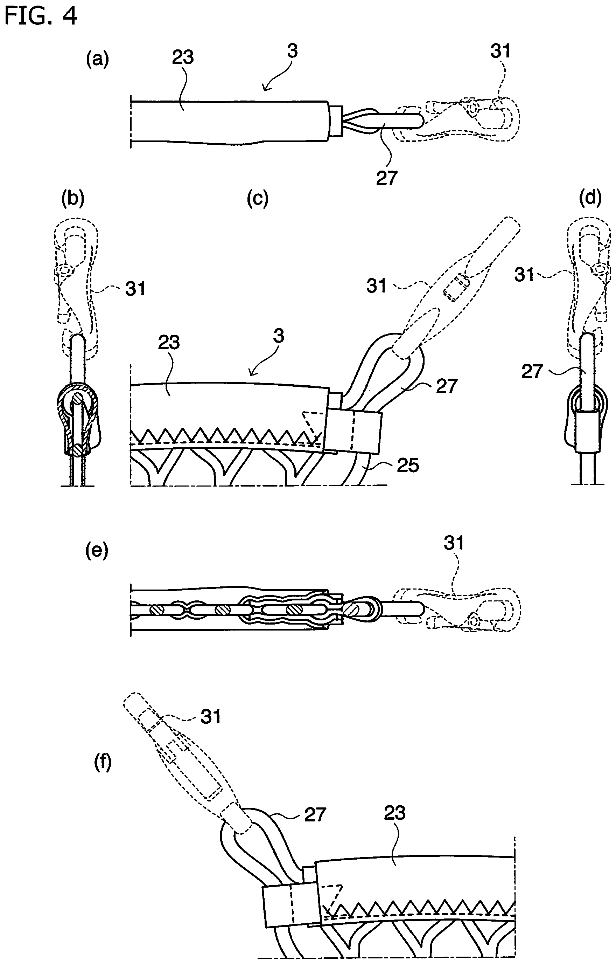

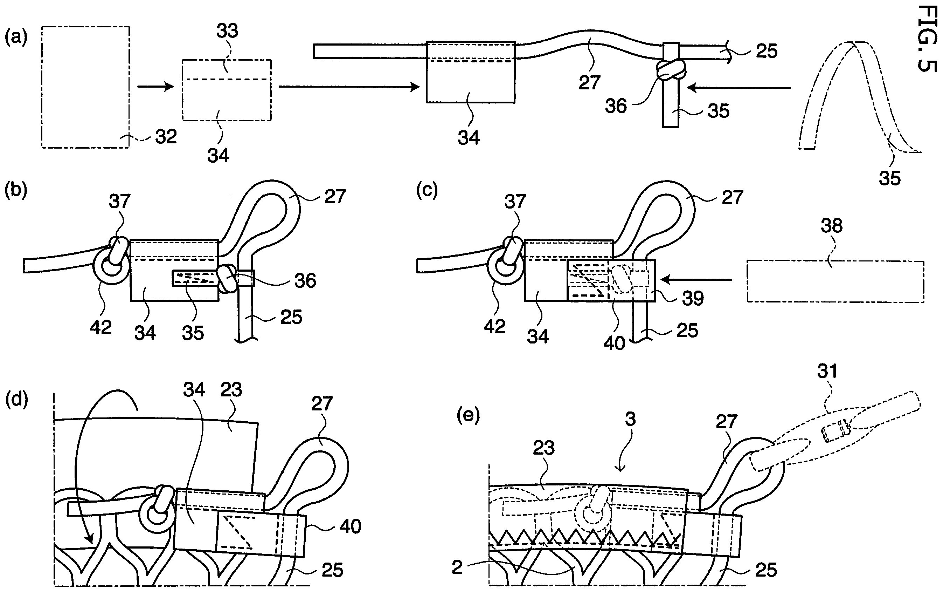

In order to prevent such an accident, the corner portions 3 are reinforced in the present embodiment. FIG. 4 includes enlarged views of the corner portion 3 located in an upper right portion A-A of the net 2, and FIG. 5 shows a method of forming the corner portion 3 shown in FIG. 4.

First, in FIG. 5(a), a first piece of cloth (e.g., elastic tape) 32 is folded in two over the end elastic cord 25 to form a first base piece 34 that has a tube 33. The end elastic cord 25 is accommodated inside the tube 33. A short fixing cord 35 is then fixed around the end elastic cord 25 with a knot 36.

In FIG. 5(b), a knot 37 is formed to prevent the first base piece 34 from moving, and the free end side of the fixing cord 35 is fixed by being sewn to the first base piece 34. This forms a U-shaped corner 27. A washer 42 is attached to the knot 37 to retain it.

In FIG. 5(c), the fixing cord 35 is covered by a second piece of cloth (e.g., elastic tape) 38 that is folded in two, thus forming a second base piece 40 that has a tube 39. The elastic cord 25 is accommodated inside the tube 39. The first base piece 34 and the second base piece 40 are then fixed by being sewn together firmly.

In FIG. 5(d), the previously-described bias tape 23 is folded in two, placed over the first base piece 34 and the second base piece 40, and bound to firmly sew together the first base piece 34 and the second base piece 40.

FIG. 5(e) shows the completed state, which is the same as the state in FIG. 4(c).

The strength of the corner portion formed in this way was compared with the conventional product shown in FIG. 8.

### Embodiment of present invention

**Table 1**

| Number | Breaking strength | Result |
|---|---|---|
| 1 | 678.9 N | Separation from jig |
| 2 | 738.5 N | Elastic cord breakage |
| 3 | 717.0 N | No breakage |
| 4 | 878.0 N | Elastic cord breakage |
| 5 | 734.2 N | Elastic cord breakage |

### Conventional example

**Table 2**

| Number | Breaking strength | Result |
|---|---|---|
| 1 | 364.7 N | Rupture and separation of U-shaped elastic cord |
| 2 | 286.0 N | Rupture and separation of U-shaped elastic cord |
| 3 | 416.0 N | Rupture and separation of U-shaped elastic cord |
| 4 | 304.1 N | Separation of 1 end elastic cord |
| 5 | 210.3 N | Separation of 1 end elastic cord |

The breaking strength of the corner portion of the present embodiment was improved by 230% over the conventional product.

### Second embodiment of corner portion

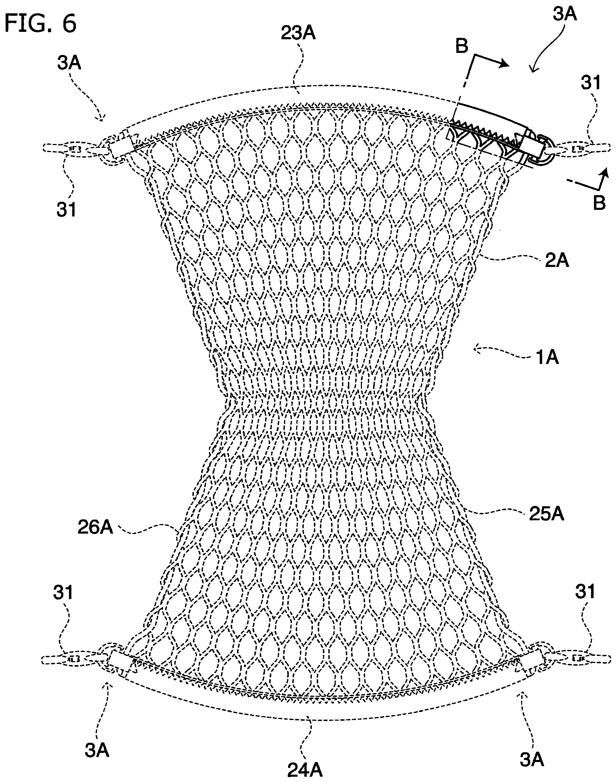

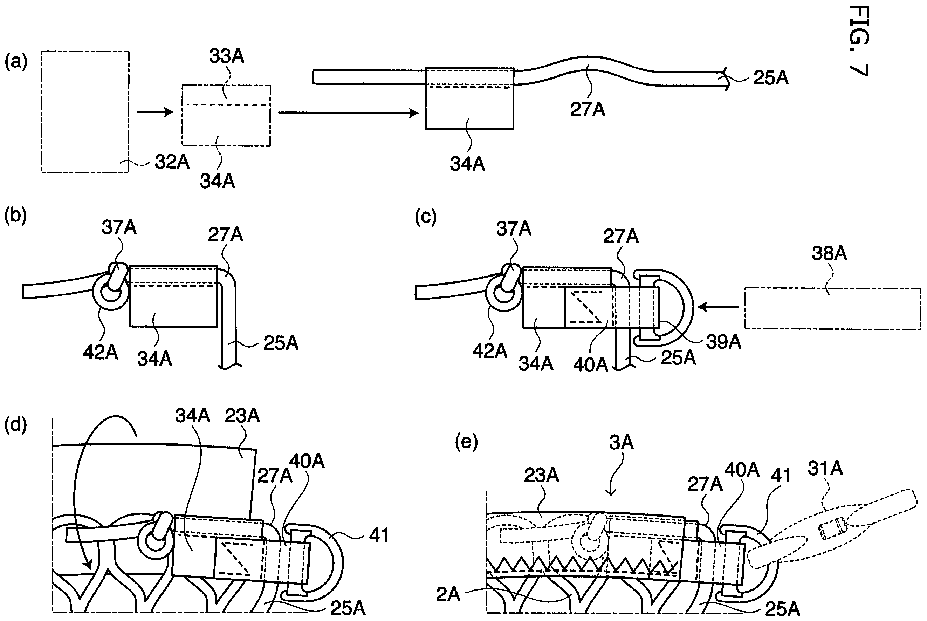

FIGS. 6 and 7 show a second embodiment of the corner portion. The second embodiment will be described with reference to FIG. 5, which shows the first embodiment, and FIG. 7, which shows the second embodiment. Although the same reference signs are given to elements that are the same in the two embodiments, the reference signs in the second embodiment are appended with an "A", and some descriptions will be omitted. In (a) and (b), the short fixing cord 35 of the first embodiment does not exist in the second embodiment. Whereas the U-shaped corner 27 is pulled outward in the first embodiment, in (b), the corner portion 27A of the second embodiment is not pulled into a "U" shape, and is connected to the end elastic cord 25A at an approximately right angle.

In (c), in the second embodiment, the end elastic cord 25A is covered with the second piece of cloth 38A that is folded in two, thus forming the second base piece 40 that has the tube 39A. The end elastic cord 25A and a D ring 41 are accommodated inside the tube 39A. The first base piece 34A and the second base piece 40A are then fixed by being sewn together firmly.

In (d), the previously-described bias tape 23A is folded in two, placed over the first base piece 34A and the second base piece 40A, and bound to firmly sew together the first base piece 34A and the second base piece 40A. The D ring 41 protrudes from the bias tape 23A.

The completed state is shown in (e), and the hook 31A is attached to the D ring 41. The corner 27 stretched into a "U" shape does not exist in the second embodiment, thus obtaining a cleaner appearance.

In this embodiment, the D ring 41 is directly coupled to the second base piece 40A, and therefore it is preferable that the number of mesh holes in the W direction is increased in order to supplement the elastic stretchability. For example, in the above embodiment, the number of mesh holes is increased from 25 holes to 27 holes. As a result, the strength is comparable as well.

Reference(s) to "embodiment(s)" throughout the description which are not under the scope of the appended claims merely represent possible exemplary executions and are therefore not part of the present invention.

### Reference Signs

- B: Goods
- C: Automobile
- F: Floor
- L: Trunk lid
- T: Trunk compartment
- 1: Article retainer for trunk compartment
- 2: Net
- 21: Upper side
- 22: Lower side
- 23, 23A: Bias tape (sewing elastic)
- 25, 25A: Elastic cord
- 26: Left side
- 27: U-shaped corner
- 27A: Right-angle-shaped corner
- 3: Corner portion
- 31: Hook
- 32, 32A: First piece of cloth (tape)
- 33: Tube
- 34, 34A: First base piece
- 35: Fixing cord
- 36: Knot
- 37: Knot
- 38, 38A: Second piece of cloth (tape)
- 39: Tube
- 40, 40A: Second base piece
- 41: D ring
- 42: Washer

## Claims

1. An article retainer (1) for a trunk compartment (T) of an automobile (C), the article retainer (1) comprising:
a net main body (2) that has elasticity and is approximately rectangular in a stretched state,
wherein one side (21) of the net main body (2) is attached to a lower inner portion on an outward side of a trunk lid (L), and another side (22) of the net that opposes the one side (21) is attached to a position on a floor of the trunk compartment (T) that is nearest to a vehicle inward side **characterized in that** a corner portion (3) used in the net (2) includes a U-shaped corner (27) formed by an edge elastic cord (25), left and right sides of the U-shaped corner (27) being firmly supported by a first base piece (34) and a second base piece (40), and the first base piece (34) and the second base piece (40) also being firmly sewn together by bias tape (23).

2. An article retainer (1) for a trunk compartment (T) of an automobile (C), the article retainer (1) comprising:
a net main body (2) that has elasticity and is approximately rectangular in a stretched state,
wherein one side (21) of the net main body (2) is attached to a lower inner portion on an outward side of a trunk lid (L), and another side (22) of the net that opposes the one side (21) is attached to a position on a floor of the trunk compartment (T) that is nearest to a vehicle inward side,
wherein a corner portion (3) used in the net (2) includes a right-angle-shaped corner (27A) formed by an edge elastic cord (25A), left and right sides of the right-angle-shaped corner (27A) being firmly supported by a first base piece (34A) and a second base piece (40A), the first base piece (34A) and the second base piece (40A) also being firmly sewn together by bias tape (23A), and a D ring (41) for hook engagement being coupled to the second base piece (40A).

3. The article retainer (1) according to claim 1 or 2,
wherein an elongation rate (extending length of a 100 mm test piece) of the net main body (2) is 160% to 180%.

4. The article retainer (1) according to claim 1 or 2,
wherein a kickback force (load when 100 mm test piece is stretched to 150 mm) of the net main body (2) is 24 N to 26 N.

5. The article retainer (1) according to any of claims 1 to 2,
wherein a load flexure amount (flexure amount when fixed to a jig and loaded with a weight of 2 kg 210×300×40H) of the net main body (2) is 130 mm to 150 mm.

6. The article retainer (1) according to any of claims 1 to 2,
wherein an elongation rate of an end elastic cord (25, 26) of the net main body (2) is 240% to 270%, and a kickback force of the end elastic cord (25, 26) is 3 N to 5 N.

## Patentansprüche

1. Gegenstandshalter (1) für einen Kofferraum (T) eines Kraftfahrzeugs (C), wobei der Gegenstandshalter (1) umfasst:
einen Netzhauptkörper (2), der eine Elastizität aufweist und in einem gedehnten Zustand annähernd rechteckig ist,
wobei eine Seite (21) des Netzhauptkörpers (2) an einem unteren inneren Abschnitt an einer Außenseite eines Kofferraumdeckels (L) befestigt ist und eine andere Seite (22) des Netzes, die der einen Seite (21) gegenüberliegt, an einer Position auf einem Boden des Kofferraumes (T) befestigt ist, die einer Innenseite des Fahrzeugs am nächsten liegt,
**dadurch gekennzeichnet, dass** ein im Netz (2) verwendeter Eckabschnitt (3) eine U-förmige Ecke (27) umfasst, die durch eine elastische Kantenschnur (25) gebildet wird, wobei linke und rechte Seiten der U-förmigen Ecke (27) durch ein erstes Basisteil (34) und ein zweites Basisteil (40) fest gelagert sind und wobei das erste Basisteil (34) und das zweite Basisteil (40) ferner durch ein Schrägband (23) fest miteinander vernäht sind.

2. Gegenstandshalter (1) für einen Kofferraum (T) eines Kraftfahrzeugs (C), wobei der Gegenstandshalter (1) umfasst:
einen Netzhauptkörper (2), der eine Elastizität aufweist und in einem gedehnten Zustand annähernd rechteckig ist,
wobei eine Seite (21) des Netzhauptkörpers (2) an einem unteren inneren Abschnitt an einer Außenseite eines Kofferraumdeckels (L) befestigt ist und eine andere Seite (22) des Netzes, die der einen Seite (21) gegenüberliegt, an einer Position auf einem Boden des Kofferraumes (T) befestigt ist, die einer Innenseite des Fahrzeugs am nächsten liegt,
wobei ein im Netz (2) verwendeter Eckabschnitt (3) eine rechtwinklige Ecke (27A) umfasst, die durch eine elastische Kantenschnur (25A) gebildet wird, wobei linke und rechte Seiten der rechtwinkligen Ecke (27A) durch ein erstes Basisteil (34A) und ein zweites Basisteil (40A) fest gelagert sind, wobei das erste Basisteil (34A) und das zweite Basisteil (40A) ferner durch ein Schrägband (23A) fest miteinander vernäht sind und wobei ein D-Ring (41) für einen Hakeneingriff mit dem zweiten Basisteil (40A) gekoppelt ist.

3. Gegenstandshalter (1) nach Anspruch 1 oder 2,
wobei eine Dehnrate (Auszugslänge eines 100 mm langen Probestücks) des Netzhauptkörpers (2) 160 % bis 180 % beträgt.

4. Gegenstandshalter (1) nach Anspruch 1 oder 2,
wobei eine Rückstellkraft (Belastung bei Dehnung eines 100 mm langen Probestücks bis auf 150 mm) des Netzhauptkörpers (2) 24 N bis 26 N beträgt.

5. Gegenstandshalter (1) nach einem der Ansprüche 1 bis 2,
wobei ein Maß der Biegung bei Belastung (Maß der Biegung bei Befestigung an einer Vorrichtung und Belastung mit einem Gewicht von 2 kg 210 x 300 x 40 H) des Netzhauptkörpers (2) 130 mm bis 150 mm beträgt.

6. Gegenstandshalter (1) nach einem der Ansprüche 1 bis 2,
wobei eine Dehnrate einer elastischen Endschnur (25, 26) des Netzhauptkörpers (2) 240 % bis 270 % beträgt und eine Rückstellkraft der elastischen Endschnur (25, 26) 3 N bis 5 N beträgt.

## Revendications

1. Dispositif de retenue (1) d'articles pour un compartiment de coffre (T) d'une automobile (C), le dispositif de retenue (1) d'articles comprenant :
un corps principal de filet (2) qui a une élasticité et est approximativement rectangulaire dans un état étiré,
dans lequel un côté (21) du corps principal de filet (2) est fixé à une partie intérieure basse sur un côté extérieur d'une porte (L) de coffre, et un autre côté (22) du filet qui est opposé au premier côté (21) est fixé à une position sur un plancher du compartiment de coffre (T) qui est la plus proche d'un côté intérieur du véhicule,
**caractérisé en ce qu'**une partie de coin (3) utilisée dans le filet (2) comprend un coin (27) en forme d'U formé par un cordon (25) élastique de bordure, les côtés gauche et droit du coin (27) en forme d'U étant fermement supportés par une première pièce de base (34) et une seconde pièce de base (40), et la première pièce de base (34) et la seconde pièce de base (40) étant également fermement cousues ensemble par une bande en biais (23).

2. Dispositif de retenue (1) d'articles pour un compartiment de coffre (T) d'une automobile (C), le dispositif de retenue (1) d'articles comprenant :
un corps principal de filet (2) qui a une élasticité et est approximativement rectangulaire dans un état étiré,
dans lequel un côté (21) du corps principal de filet (2) est fixé à une partie intérieure basse sur un côté extérieur d'une porte (L) de coffre, et un autre côté (22) du filet qui est opposé au premier côté (21) est fixé à une position sur un plancher du compartiment de coffre (T) qui est la plus proche d'un côté intérieur du véhicule,
dans lequel une partie de coin (3) utilisée dans le filet (2) comprend un coin (27A) en forme d'angle droit formé par un cordon (25A) élastique de bordure, les côtés gauche et droit du coin (27A) en forme d'angle droit étant fermement supportés par une première pièce de base (34A) et une seconde pièce de base (40A), la première pièce de base (34A) et la seconde pièce de base (40A) étant également fermement cousues ensemble par une bande en biais (23A), et un anneau en D (41) pour l'engagement du crochet étant couplé à la seconde pièce de base (40A).

3. Dispositif de retenue (1) d'articles selon la revendication 1 ou 2,
dans lequel un taux d'allongement (longueur d'extension d'un échantillon d'essai de 100 mm) du corps principal de filet (2) est de 160 % à 180 %.

4. Dispositif de retenue (1) d'articles selon la revendication 1 ou 2,
dans lequel une force de rebond (charge lorsque l'échantillon d'essai de 100 mm est étiré à 150 mm) du corps principal de filet (2) est de 24 N à 26 N.

5. Dispositif de retenue (1) d'articles selon l'une quelconque des revendications 1 à 2,
dans lequel une quantité de flexion sous charge (quantité de flexion lorsqu'il est fixé à un montage de fixation et chargé avec un poids de 2 kg 210×300×40H) du corps principal de filet (2) est de 130 mm à 150 mm.

6. Dispositif de retenue (1) d'articles selon l'une quelconque des revendications 1 à 2,
dans lequel un taux d'allongement d'un cordon élastique d'extrémité (25, 26) du corps principal de filet (2) est de 240 % à 270 % et une force de rebond du cordon élastique d'extrémité (25, 26) est de 3 N à 5 N.
